# EUROPÄISCHE PATENTSCHRIFT

(11) **EP 3 213 966 B1**
(45) Veröffentlichungstag und Bekanntmachung des Hinweises auf die Patenterteilung: **19.06.2019**
(21) Anmeldenummer: 17000114.3
(22) Anmeldetag: 20.01.2017
(51) Int. Cl.: B60R 19/56

(54) **VORRICHTUNG, INSBESONDERE UNTERFAHRSCHUTZVORRICHTUNG, FÜR EIN KRAFTFAHRZEUG**
DEVICE, IN PARTICULAR DEVICE FOR UNDERRUN PROTECTION, FOR A MOTOR VEHICLE
DISPOSITIF, EN PARTICULIER DISPOSITIF ANTI-ENCASTREMENT POUR UN VÉHICULE AUTOMOBILE

(30) Priorität: 01.03.2016 DE 102016002510
(43) Veröffentlichungstag der Anmeldung: 06.09.2017
(73) Patentinhaber: MAN Truck & Bus AG, 80995 München (DE)
(72) Erfinder: Schaupp, Johann, 80689 München (DE); Just, Robert, 85256 Vierkirchen (DE); Kolja, Peter, 81541 München (DE)
(74) Vertreter: v. Bezold & Partner Patentanwälte - PartG mbB

(56) Entgegenhaltungen:
- EP-A1- 2 821 293
- WO-A1-02/074570
- DE-A1- 10 129 066
- DE-A1-102008 023 241
- DE-U1-202013 002 033

## Beschreibung

Die Erfindung betrifft eine Unterfahrschutzvorrichtung, für ein Nutzfahrzeug, wie z. B. einen Lastkraftwagen oder einen Omnibus.

Aus der DE 44 28 101 C2 ist bereits ein Front-Unterfahrschutzvorrichtung für einen Lastkraftwagen bekannt. Derartige Front-Unterfahrschutzvorrichtungen müssen insbesondere Vorgaben in Bezug auf Maße und Festigkeit (Kräfte, Aufpralllasten, etc.) nach der ECE-Regelung R93 (ECE-R93) erfüllen. In gewissen Einzelfällen müssen auch die Vorgaben der ECE-R61 erfüllt werden. In der Praxis ist es oftmals schwierig und aufwändig, eine Front-Unterfahrschutzvorrichtung zu schaffen, die einerseits die geforderten Maße und anderseits die geforderte Festigkeit erfüllt.

Die EP 2 821 293 A1 offenbart eine Halterungsanordnung zum Nachrüsten einer Seitenblende an einem Seitenschutzsystem eines Fahrzeugs. Die Halterungsanordnung umfasst eine erste vertikale und längliche Halterung und eine zweite vertikale und längliche Halterung, die an dem Seitenschutzsystem des Fahrzeugs anbringbar sind.

Die DE 20 2013 002033 U1 offenbart eine Frontpartie für ein Kraftfahrzeug mit einer Stoßfängerverkleidung und einem durch sich in Fahrzeuglängsrichtung erstreckende Strukturen versteiften Unterfahrschutz. Ein hinterer Rand des Unterfahrschutzes ist an einem Rahmen des Kraftfahrzeugs befestigt. Ein vorderer Rand des Unterfahrschutzes ist mit der Stoßfängerverkleidung verbunden.

Die EP 2 821 293 A1 offenbart eine Unterfahrschutzvorrichtung nach dem Oberbegriff von Anspruch 1.

Eine Aufgabe der Erfindung ist es, eine Vorrichtung für ein Kraftfahrzeug zu schaffen, mittels der auf einfache Art und Weise einerseits Maßanforderungen und andererseits Festigkeitsanforderungen erfüllt werden können.

Diese Aufgabe kann mit den Merkmalen des Hauptanspruchs gelöst werden. Vorteilhafte Weiterbildungen der Erfindung können den Unteransprüchen und der folgenden Beschreibung bevorzugter Ausführungsformen der Erfindungen entnommen werden.

Die Erfindung schafft eine Unterfahrschutzvorrichtung, für ein Nutzfahrzeug, z. B. einen Lastkraftwagen oder einen Omnibus. Die Unterfahrschutzvorrichtung ist vorzugsweise eine Front-Unterfahrschutzvorrichtung, kann aber auch z. B. eine Seiten- oder Heck-Unterfahrschutzvorrichtung sein.

Die Vorrichtung umfasst eine Querträgerkonstruktion und eine Tragstruktur zum Tragen der Trägerkonstruktion und zur Montage an das Kraftfahrzeug, vorzugsweise ein zwei Längsträger und zumindest einen Querträger umfassendes Chassis (z. B. Fahrgestell) des Kraftfahrzeugs.

Die Tragstruktur und die Trägerkonstruktion können z. B. aneinander befestigt sein, z. B. mittels einer Schweißverbindung, Schraubverbindung, etc. Es ist sogar möglich, die Tragstruktur und die Trägerkonstruktion z. B. einstückig-integral zu gestalten.

Die Vorrichtung zeichnet sich dadurch aus, dass die Trägerkonstruktion mit zumindest einer Blende versehen ist, insbesondere mit einer Front-Blende. Die Blende kann zweckmäßig an die Trägerkonstruktion montiert und/oder aufgesetzt sein.

Die Erfindung basiert insbesondere auf einer funktionellen Zweiteilung.

Die Trägerkonstruktion und die Tragstruktur dienen zweckmäßig zur Aufnahme geforderter Kräfte, Aufpralllasten, etc. Die Blende hingegen dient dazu, geforderte Maße zu erfüllen.

Dadurch können auf vorteilhafte Art und Weise insbesondere Anforderungen gemäß der ECE-R93 erfüllt werden. Alternativ oder ergänzend können insbesondere Anforderungen gemäß der Außenkantenrichtlinie ECE-R61 erfüllt werden, vorzugsweise ohne eines oder mehrere Zusatzteile, wie Kappen, Deckel etc.

Ebenfalls ist zweckmäßig eine hochkomplexe Formgebung z. B. nach Designvorschlägen möglich. Darüber hinaus kann die Vorrichtung preisgünstig hergestellt werden und ist gegenüber üblichen Unterfahrschutzvorrichtungen relativ leichtgewichtig.

Die Blende kann z. B. seitlich, oben und/oder unten über die Trägerkonstruktion hinausragen.

Es ist möglich, dass die Blende nach hinten geformt ist, z. B., um die Trägerkonstruktion seitlich, oben und/oder unten zu überlappen.

Die Blende kann insbesondere mit einer Spoilerlippe versehen sein.

Die Spoilerlippe erstreckt sich vorzugsweise entlang der Unterseite der Blende.

Die Blende kann eine oder mehrere Leitungshalterungen zur Halterung einer oder mehrerer Leitungen umfassen, die z. B. an der Oberseite der Blende angeordnet sein können.

Alternativ oder ergänzend kann die Blende zumindest einen Befestigungsclip oder zumindest ein Gewindeinsert umfassen, um vorzugsweise ein oder mehrere Anbauteile haltern zu können.

Die Blende kann aus Kunststoff, Aluminium oder Stahl gefertigt sein.

Die Trägerkonstruktion und/oder die Tragstruktur ist vorzugsweise aus Aluminium oder Stahl hergestellt.

Die Blende ist vorzugsweise mittels lösbarer Befestigungsmittel lösbar an die Trägerkonstruktion montiert.

Es ist möglich, dass die Blende und/oder die Trägerkonstruktion zumindest einen Hohlraum oder zumindest eine Aussparung aufweist. Der Hohlraum oder die Aussparung kann z. B. als Vertiefung, Loch, Öffnung, Ausnehmung und/oder Durchgangsloch ausgebildet sein.

Vorzugsweise ist in dem Hohlraum oder der Aussparung der Blende und/oder der Trägerkonstruktion zumindest ein Behälter für ein Medium, z. B. Luft, Wasser, etc. zumindest abschnittsweise aufgenommen, insbesondere integriert.

Die Blende weist vorzugsweise mehrere Versteifungsrippen auf.

Im Rahmen der Erfindung kann die Vorrichtung als z. B. vorderer oder hinterer Querträger dienen, z. B. Schlussquerträger. Alternativ oder ergänzend ist auch eine seitliche Montage an das Kraftfahrzeug möglich, so dass sich die Trägerkonstruktion zweckmäßig im Wesentlichen in Längsrichtung des Kraftfahrzeugs erstreckt.

Die Vorrichtung ist als Unterfahrschutzvorrichtung ausgeführt, vorzugsweise als Front-Unterfahrschutzvorrichtung.

Die Querträgerkonstruktion erstreckt sich vorzugsweise im Wesentlichen in Querrichtung des Kraftfahrzeugs.

Die Erfindung ist nicht auf eine Vorrichtung wie hierin beschrieben beschränkt, sondern umfasst auch ein Kraftfahrzeug mit zumindest einer solchen Vorrichtung.

Das Kraftfahrzeug ist ein Nutzfahrzeug, z. B. ein Lastkraftwagen oder ein Omnibus.

Die vorstehend beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit der beigefügten Figur.

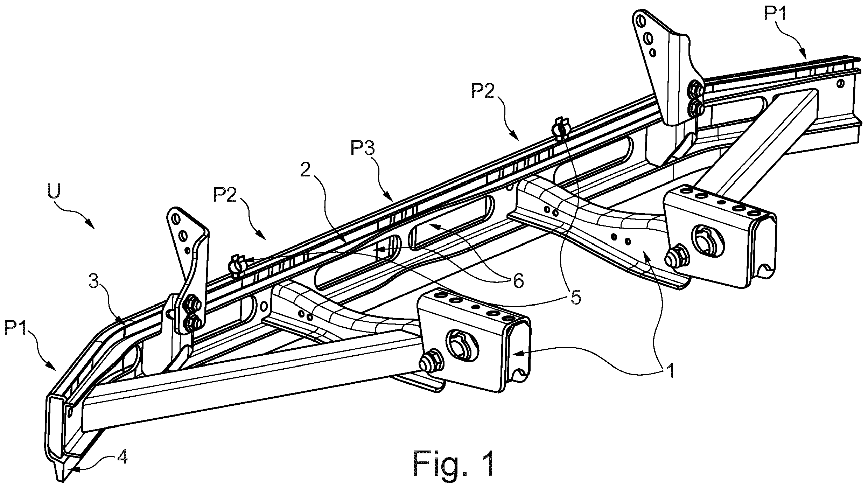

- Figur 1: zeigt eine perspektivische Ansicht einer Vorrichtung gemäß einer Ausführungsform der Erfindung.

In Figur 1 ist eine Vorrichtung U für ein Kraftfahrzeug gemäß einer Ausführungsform der Erfindung gezeigt, insbesondere eine Front-Unterfahrschutzvorrichtung U.

Die Schutzvorrichtung U umfasst eine Tragstruktur 1 und eine als Querträgerkonstruktion ausgeführte Trägerkonstruktion 2. Die Tragstruktur 1 dient zum Tragen der Querträgerkonstruktion 2 und zur Montage an den Lastkraftwagen, insbesondere das Chassis des Lastkraftwagens. Die Tragstruktur 1 und die Querträgerkonstruktion 2 sind vorzugsweise miteinander verschweißt, können aber auch auf andere Art und Weise aneinander befestigt werden. Es ist sogar eine einteilige Ausführung aus Tragstruktur 1 und Querträgerkonstruktion 2 denkbar.

Die Querträgerkonstruktion 2 ist mit einer Blende 3, insbesondere einer Front-Blende 3 versehen.

Die Tragstruktur 1 und die Querträgerkonstruktion 2 dienen zweckmäßig zur Aufnahme von Aufprallkräften P1, P2 und P3 und insbesondere dazu, die Anforderungen gemäß ECE-R93 in Bezug auf Aufprallasten zu erfüllen. Die Blende 3 hingegen dient zweckmäßig dazu, Maßanforderungen gemäß ECE-R93 und/oder ECE-R61 zu erfüllen, vorzugsweise ohne zusätzliche Kappen, Deckel, etc.

Die Blende 3 ragt oben und unten über die Querträgerkonstruktion 2 hinaus. Zudem ist die Blende 3 nach hinten geformt, um die Trägerkonstruktion 2 oben und unten zu überlappen oder gar gänzlich rückseitig zu überspannen. Die Blende 3 kann zweckmäßig auch seitlich über die Querträgerkonstruktion 2 hinausragen.

Die Blende 3 ist an ihrer Unterseite mit einer Spoilerlippe 4 versehen, die sich zweckmäßig entlang der Unterseite der Blende 3 erstreckt.

Darüber hinaus umfasst die Blende 3 an ihrer Oberseite zwei Leitungshalterungen 5 zur Halterung einer oder mehrerer Leitungen. Alternativ oder ergänzend kann die Blende 3 einen oder mehrere Befestigungsclips oder ein oder mehrere Gewindeinserts umfassen, zur zweckmäßigen Montage eines oder mehrerer Anbauteile.

Die Blende 3 kann zweckmäßig mittels lösbaren Befestigungsmitteln lösbar an die Trägerkonstruktion montiert sein, um zweckmäßig auf einfache Art und Weise montiert und demontiert werden zu können.

Die Blende 3 und die Querträgerkonstruktion 2 umfassen mehrere Hohlräume (Aussparungen, Löcher, Vertiefungen, Öffnungen und/oder Ausnehmungen), von denen einige in Figur 1 mit dem Bezugszeichen 6 versehen sind. Einer oder mehrere der Hohlräume 6 ist nutzbar zur Aufnahme eines oder mehrerer, in der Figur 1 nicht gezeigter Behälter für Medien, z. B. Luft, Wasser, etc.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen. Darüber hinaus beansprucht die Erfindung auch Schutz für den Gegenstand und die Merkmale der Unteransprüche unabhängig von den in Bezug genommenen Merkmalen und Ansprüchen.

### Bezugszeichenliste

- 1: Tragstruktur
- 2: Trägerkonstruktion, insbesondere Querträgerkonstruktion
- 3: Blende
- 4: Spoilerlippe
- 5: Leitungshalterung
- 6: Hohlraum/Aussparung
- P1, P2, P3: Kräfte, insbesondere Aufpralllasten
- U: Vorrichtung, Unterfahrschutzvorrichtung, insbesondere hinten, vorne und/oder seitlich

## Patentansprüche

1. Nutzfahrzeug, nämlich Lastkraftwagen oder Omnibus, aufweisend eine Unterfahrschutzvorrichtung (U), mit einer Querträgerkonstruktion (2) und einer Tragstruktur (1) zum Tragen der Querträgerkonstruktion (2) und zur Montage an das Nutzfahrzeug, **dadurch gekennzeichnet, dass** die Querträgerkonstruktion (2) mit einer Blende (3) versehen ist, wobei die Blende (3) zur Maßeinhaltung dient.

2. Nutzfahrzeug nach Anspruch 1, **dadurch gekennzeichnet, dass** die Blende (3) seitlich, oben und/oder unten über die Querträgerkonstruktion (2) hinausragt.

3. Nutzfahrzeug nach Anspruch 1 oder 2, **dadurch gekennzeichnet, dass** die Blende (3) nach hinten geformt ist, vorzugsweise, um die Querträgerkonstruktion (2) seitlich, oben und/oder unten zu überlappen.

4. Nutzfahrzeug nach einem der vorhergehenden Ansprüche, **dadurch gekennzeichnet, dass** die Blende (3) eine Spoilerlippe (4) umfasst und vorzugsweise sich die Spoilerlippe (4) entlang der Unterseite der Blende (3) erstreckt.

5. Nutzfahrzeug nach einem der vorhergehenden Ansprüche, **dadurch gekennzeichnet, dass** die Blende (3) zumindest eine Leitungshalterung (5) zur Halterung einer Leitung umfasst und vorzugsweise die Leitungshalterung (5) an der Oberseite der Blende (3) angeordnet ist.

6. Nutzfahrzeug nach einem der vorhergehenden Ansprüche, **dadurch gekennzeichnet, dass** die Blende (3) zumindest einen Befestigungsclip oder zumindest ein Gewindeinsert umfasst.

7. Nutzfahrzeug nach einem der vorhergehenden Ansprüche, **dadurch gekennzeichnet, dass** die Blende (3) aus Kunststoff, Aluminium oder Stahl gefertigt ist.

8. Nutzfahrzeug nach einem der vorhergehenden Ansprüche, **dadurch gekennzeichnet, dass** die Querträgerkonstruktion (2) und/oder die Tragstruktur (1) aus Aluminium oder Stahl gefertigt ist.

9. Nutzfahrzeug nach einem der vorhergehenden Ansprüche, **dadurch gekennzeichnet, dass** die Blende (3) mittels lösbaren Befestigungsmitteln lösbar an die Querträgerkonstruktion (2) montiert ist.

10. Nutzfahrzeug nach einem der vorhergehenden Ansprüche, **dadurch gekennzeichnet, dass** die Blende (3) und/oder die Querträgerkonstruktion (2) zumindest einen Hohlraum oder zumindest eine Aussparung (6) aufweist.

11. Nutzfahrzeug nach Anspruch 10, **dadurch gekennzeichnet, dass** in dem Hohlraum oder der Aussparung (6) zumindest abschnittsweise zumindest ein Behälter für ein Medium aufgenommen ist.

12. Nutzfahrzeug nach einem der vorhergehenden Ansprüche, **dadurch gekennzeichnet, dass** die Querträgerkonstruktion (2) und die Tragstruktur (1) zur Aufnahme von Aufpralllasten dienen.

13. Nutzfahrzeug nach einem der vorhergehenden Ansprüche, **dadurch gekennzeichnet, dass** die Blende (3) Versteifungsrippen aufweist.

14. Nutzfahrzeug nach einem der vorhergehenden Ansprüche, **dadurch gekennzeichnet, dass** die Querträgerkonstruktion (2) eine sich in Querrichtung des Nutzfahrzeugs erstreckende Querträgerkonstruktion ist und die Vorrichtung (U) eine Front-Unterfahrschutzvorrichtung ist.

## Claims

1. A utility vehicle, namely lorry or bus, having an underrun protection device (U), with a crossmember construction (2) and a supporting structure (1) for supporting the crossmember construction (2) and for the installation on the utility vehicle, **characterized in that** the crossmember construction (2) is provided with a panel (3), the panel (3) serving to comply with the dimensions.

2. The utility vehicle according to Claim 1, **characterized in that** the panel (3) projects over the crossmember construction (2) laterally, at the top and/or at the bottom.

3. The utility vehicle according to Claim 1 or 2, **characterized in that** the panel (3) is shaped rearwards, preferably in order to overlap the crossmember construction (2) laterally, at the top and/or at the bottom.

4. The utility vehicle according to one of the preceding claims, **characterized in that** the panel (3) comprises a spoiler lip (4) and the spoiler lip (4) preferably extends along the lower side of the panel (3).

5. The utility vehicle according to one of the preceding claims, **characterized in that** the panel (3) comprises at least one line holder (5) for holding a line, and the line holder (5) is preferably arranged on the upper side of the panel (3) .

6. The utility vehicle according to one of the preceding claims, **characterized in that** the panel (3) comprises at least one fastening clip or at least one threaded insert.

7. The utility vehicle according to one of the preceding claims, **characterized in that** the panel (3) is manufactured from plastic, aluminium or steel.

8. The utility vehicle according to one of the preceding claims, **characterized in that** the crossmember construction (2) and/or the supporting structure (1) is manufactured from aluminium or steel.

9. The utility vehicle according to one of the preceding claims, **characterized in that** the panel (3) is mounted releasably on the crossmember construction (2) by means of releasable fastening means.

10. The utility vehicle according to one of the preceding claims, **characterized in that** the panel (3) and/or the crossmember construction (2) has at least one cavity or at least one recess (6).

11. The utility vehicle according to Claim 10, **characterized in that** at least one container for a medium is accommodated at least in sections in the cavity or the recess (6).

12. The utility vehicle according to one of the preceding claims, **characterized in that** the crossmember construction (2) and the supporting structure (1) serve for absorbing impact loads.

13. The utility vehicle according to one of the preceding claims, **characterized in that** the panel (3) has stiffening ribs.

14. The utility vehicle according to one of the preceding claims, **characterized in that** the crossmember construction (2) is a crossmember construction extending in the transverse direction of the utility vehicle, and the device (U) is a front underrun protection device.

## Revendications

1. Véhicule utilitaire, plus particulièrement camion ou omnibus, comprenant un dispositif anti-encastrement (U), avec une structure à traverses (2) et une structure porteuse (1) pour le support de la structure à traverses (2) et pour le montage sur le véhicule utilitaire, **caractérisé en ce que** la structure à traverses (2) est munie d'un panneau (3), le panneau (3) permettant le respect des dimensions.

2. Véhicule utilitaire selon la revendication 1, **caractérisé en ce que** le panneau (3) dépasse latéralement, au-dessus et/ou en dessous de la structure à traverses (2).

3. Véhicule utilitaire selon la revendication 1 ou 2, **caractérisé en ce que** le panneau (3) est formé vers l'arrière, de préférence afin de se superposer à la structure à traverses (2) latéralement, au-dessus et/ou en dessous.

4. Véhicule utilitaire selon l'une des revendications précédentes, **caractérisé en ce que** le panneau (3) comprend une lèvre de spoiler (4) et la lèvre de spoiler (4) s'étend de préférence le long du côté inférieur du panneau (3).

5. Véhicule utilitaire selon l'une des revendications précédentes, **caractérisé en ce que** le panneau (3) comprend au moins un support de conduite (5) pour le support d'une conduite et de préférence le support de conduite (5) est disposé sur le côté supérieur du panneau (3).

6. Véhicule utilitaire selon l'une des revendications précédentes, **caractérisé en ce que** le panneau (3) comprend au moins un clip de fixation ou au moins un insert fileté.

7. Véhicule utilitaire selon l'une des revendications précédentes, **caractérisé en ce que** le panneau (3) est constitué de matière plastique, d'aluminium ou d'acier.

8. Véhicule utilitaire selon l'une des revendications précédentes, **caractérisé en ce que** la structure à traverses (2) et/ou la structure porteuse (1) est constituée d'aluminium ou d'acier.

9. Véhicule utilitaire selon l'une des revendications précédentes, **caractérisé en ce que** le panneau (3) est monté de manière amovible sur la structure à traverses (2) à l'aide de moyens de fixation amovibles.

10. Véhicule utilitaire selon l'une des revendications précédentes, **caractérisé en ce que** le panneau (3) et/ou la structure à traverses (2) comprennent au moins une cavité ou au moins un évidement (6).

11. Véhicule utilitaire selon la revendication 10, **caractérisé en ce que**, dans la cavité ou l'évidement (6), est logé, au moins en partie, au moins un récipient pour un fluide.

12. Véhicule utilitaire selon l'une des revendications précédentes, **caractérisé en ce que** la structure à traverses (2) et la structure porteuse (1) permettent l'absorption de charges d'impacts.

13. Véhicule utilitaire selon l'une des revendications précédentes, **caractérisé en ce que** le panneau (3) comprend des nervures de rigidification.

14. Véhicule utilitaire selon l'une des revendications précédentes, **caractérisé en ce que** la structure à traverses (2) est une structure à traverses s'étendant dans la direction transversale du véhicule utilitaire et le dispositif (U) est un dispositif anti-encastrement avant.
